(19) Europäisches Patentamt
European Patent Office
Office européen des brevets

(11) Publication number: 0 212 822 A1

(12) # EUROPEAN PATENT APPLICATION

(21) Application number: 86305230.4

(22) Date of filing: 07.07.86

(51) Int. Cl.[4]: A 01 N 25/02, A 01 N 43/653, A 01 N 43/54, A 01 G 7/06

(30) Priority: 24.07.85 US 758553
12.06.86 US 871708

(43) Date of publication of application: 04.03.87 Bulletin 87/10

(84) Designated Contracting States: AT BE CH DE FR GB IT LI LU NL SE

(71) Applicant: ICI AMERICAS INC, Concord Pike & New Murphy Road, Wilmington Delaware 19897 (US)

(72) Inventor: Couture, Roger Marcel, Route 16 Box 251-1, Goldsboro North Carolina 27530 (US)

(74) Representative: Ricks, Michael James, Imperial Chemical Industries PLC Legal Department: Patents PO Box 6 Bessemer Road, Welwyn Garden City Herts, AL7 1HD (GB)

(54) **A composition containing a plant growth regulator and an alkanol and a method of using the same.**

(57) A composition containing a plant growth regulator and an alkanol carrier is disclosed. The use of such an alkanol solvent system provides for an efficient means for rapid injection with good absorption by the tree with no carrier phytotoxicity and offers a method of controlling tree height thus having valuable commercial utility along powerline right-of-ways.

EP 0 212 822 A1

Z\PP 33944 /EP

# A COMPOSITION CONTAINING A PLANT GROWTH REGULATOR AND AN ALKANOL AND A METHOD OF USING THE SAME

For both ornamental and practical reasons, it is often desirable to regulate the growth of trees. Such regulation can take the form of delaying flowering, inducing or preventing leaf or fruit drop or controlling the size of the tree. Tree size is a major concern of electric utilities since they must maintain the right-of-ways under electric cable lines. Usually, such maintenance involves physically cutting away the tops of the trees at considerable expense including the cost of labor, machinery and removal of pruned branches. This reduces the aesthetic appearance of the trees, and exposes large areas of tissue for possible invasion by pests and diseases. Further, such a topping operation involving falling debris, can be dangerous for the operators of the tree-trimming machinery.

An object of the present invention is a fast, reliable and inexpensive method of regulating, e.g., retarding, the growth of trees.

Because of their size and location, most trees cannot be treated by conventional agricultural methods (e.g., by spraying). Trunk injection provides an alternative method which does not contaminate the environment outside the tree and which can be carried out at or near ground level with safe, portable, and inexpensive equipment. The method involves minimal damage to the trees, and permits an operator to treat many trees in a short period of time. However, for a

trunk injection to be effective, material injected must subsequently travel to the crown of the tree to reach target sites in the elongating shoots. Further, it is important that this movement is gradual - preferably spread over 2-3 years - so that sudden overdoses are avoided, and so that growth retardation can be sustained for a worthwhile period of time. The water conducting tissue provides a route to move growth regulator from the trunk to the crown. An ideal growth regulator is one with low water-solubility, and with partial, and reversible, binding to the wood of the conducting tissue. If such a material could be deposited as a precipitate within the conducting tissue it would be slowly eluted upwards to achieve the desired effect.

Unfortunately, conventional formulations of low solubility materials, such as wettable powders, or suspensions, cannot be injected successfully because they contain fine particles which block the pores of the wood. Only true solutions of low viscosity can be injected at an adequate volume to introduce enough chemical, and within an acceptable period of time. A possible solution to this problem is to present the regulator initially as a solution in an organic solvent. However, choice of solvent is critical such that the formulation has the required low viscosity, the solvent does not itself cause damage to the tree and that, following injection, the solvent will mix with the water within the tree, presenting the regulator with an increasingly aqueous medium, and allowing precipitation to occur.

The invention comprises particular combinations of growth regulator and solvent which, unlike most possible combinations, do have these required properties and which can provide non-phytotoxic growth regulation over several years by the precipitation of the growth regulator upon injection thereby creating a slow release reservoir.

The present invention is drawn to compositions which, when injected into the trunks of trees, regulate their growth and a method of using such compositions.

Thus according to the present invention there is provided a composition comprising a plant growth regulator and a lower alkanol.

Many commercial plant growth regulators (PGR's) are not very soluble in water. As a result they cannot be injected in aqueous base carriers. It has been found that the injection of low water soluble PGR's (for example PGR's having a solubility in water of less than 1,000 ppm and preferably less than 500 ppm by weight) in alkanol carriers permits the rapid uptake of the PGR into the xylem tissue of the tree, with good absorption and no carrier phytotoxicity.

In the drawings, Figure 1 illustrates the technique for obtaining log samples, as discussed in Example 56.

Figure 2 illustrates the adsorptivity properties of methylene blue and acid fuschin, tracer dyes, in methanol, 50% methanol/water and water, as discussed in Example 54. Like the PGR's of this invention, methylene blue is mobile within the tree only in a lower alkanol solvent, whereas acid fuschin

is freely mobile in both water and lower alkanol and indicates the potential for movement of the PGRs of this invention after injection.

Figure 3 graphically displays the movement of methylene blue and acid fuschin in the tree as measured from the injection point, as discussed in Example 55.

Figure 4 shows the distribution of methylene blue and formula (II) within a tree treated within the scope of the invention. This Figure is discussed in Example 56.

The PGRs for use in the present invention are those which regulate the growth of trees and in particular those which inhibit gibberellin biosynthesis. Various PGRs are described in the article "Plant Growth Regulators" by L. G. Nickell in Chemical and Engineering News, October 9, 1978 at pages 18-34. Others include those described in U.S. Patent 4,243,405, which is incorporated by reference, of the following formula (I):

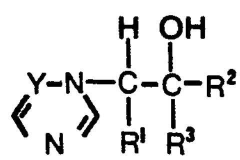

(I)

wherein

Y is -N- or -CH-;

$R^1$ is alkenyl, alkynyl or optionally substituted aralkyl;

$R^2$ is cycloalkyl, alkyl or haloalkyl; and

$R^3$ is hydrogen, methyl or alkenyl,

or a low water solubility (preferably below 1,000 ppm in water) ester, ether, acid addition salt or a metal complex thereof. The compounds of formula (I) contain chiral centers, and are generally obtained in the form of racemic mixtures. However, these or other mixtures can be separated into the individual isomers by methods known in the art, e.g., chromatography. In many cases, the compounds can be prepared stereospecifically in the form of a diastereoisomer which may itself consist of an enantiomer pair when there are two chiral centers in the compound.

Due to their chemical properties, the compounds of formula (I) function in a timed release capacity, i.e., their low water solubility combined with a long biological half life results in the gradual release and movement of the active ingredient from the injection site into the tree canopy. The alkyl groups of (I), which can be straight or branched chain, preferably have 1 to 5 carbon atoms; examples are methyl, ethyl, propyl and butyl, e.g. n- or i-propyl and n-, i- or t-butyl. Suitable alkenyl and alkynyl groups can also be straight or branched chain and are those having up to 7, preferably up to 4, carbon atoms; examples are allyl and propargyl. The aralkyl group of (I) suitably contains 7 to 12 carbon atoms. The aralkyl, e.g. benzyl, group can be substituted in its alkyl (e.g, $CH_2$) and/or aryl (e.g.,

phenyl) moieties. Suitable substituents on its aryl (e.g., phenyl) moiety are halogen, $C_{1-4}$ alkyl, e.g., methyl, ethyl, propyl (n- or i-propyl) and butyl (n-, i- or t-butyl), halo-($C_{1-4}$ alkyl), phenyl, halophenyl (e.g., chlorophenyl), cycloalkyl, nitro, cyano, $C_{1-4}$ alkoxy (e.g., methoxy or ethoxy), ($C_{1-4}$ alkylene)dioxy (e.g., methylenedioxy), ($C_{1-4}$ alkoxy) ($C_{1-4}$ alkyl), e.g., 2-methoxy- or ethoxyethyl, mercapto, ($C_{1-4}$ alkyl)thio, e.g. methyl- or ethylthio, ($C_{1-4}$ alkyl) sulphonyl, e.g. methyl- or ethylsulphonyl, ($C_{1-4}$ haloalkyl) sulphonyl, e.g. trifluoromethylsulphonyl, phenylsulphonyl, unsubstituted or mono- or di-($C_{1-4}$ alkyl)substituted sulphamoyl or carbamoyl, carboxy, ($C_{1-4}$ alkoxy)carbonyl, e.g, methoxy- or ethoxycarbonyl, unsubstituted or mono- or di-($C_{1-4}$ alkyl) substituted amino, ($C_{1-6}$ alkanoyl)amino, N-($C_{1-4}$ alkyl)substituted ($C_{1-6}$ alkanoyl)amino, formylamino, N-($C_{1-4}$ alkyl)substituted formylamino, phenylethyl, phenoxy or benzyloxy. A suitable alkanoyl is acetyl or propionyl. The aralkyl group can have more than one ring substituent; examples of polysubstituted groups are those substituted with up to the maximum possible number (especially 1, 2 or 3) of for example halogen (particularly chlorine) atoms and/or nitro, methyl or methoxy groups. Suitable substituents on the alkyl moiety of the aralkyl (e.g., benzyl) group are halogen, $C_{1-4}$ alkyl (e.g., methyl), phenyl or benzyl, both latter groups being optionally substituted as indicated above for aryl, cyano, ($C_{1-4}$ alkoxy)carbonyl, e.g., methoxy- or ethoxycarbonyl or trihalomethyl (e.g., trifluoromethyl). Examples of

suitable aralkyl groups are benzyl itself, alpha-methylbenzyl, alpha-methylchlorobenzyl (e.g., alpha-methyl-p-chlorobenzyl), alpha-methyldichlorobenzyl (e.g., alpha-methyl-2,4-dichlorobenzyl), alpha-methylfluorobenzyl, e.g., alpha-methyl-p-fluorobenzyl, chlorobenzyl (for example o-, m- or p-chlorobenzyl), dichlorobenzyl (e.g., 3,4-2,4- or 2,6-dichlorobenzyl), trichlorobenzyl (e.g., 2,3,6- or 2,4,5-trichlorobenzyl), tetrachlorobenzyl, pentachlorobenzyl, bromobenzyl (e.g., o-, m- or p-bromobenzyl), dibromobenzyl (e.g., 2,4-dibromobenzyl), fluorobenzyl (e.g., o-, m- or p-fluorobenzyl), difluorobenzyl (e.g., 2,4-difluorobenzyl), pentafluorobenzyl, methylbenzyl (e.g., o-, m- or p-methylbenzyl), dimethylbenzyl (e.g., 2,5-dimethylbenzyl), cyanobenzyl (e.g., p-cyanobenzyl), nitrobenzyl (e.g., p-nitrobenzyl), (trifluoromethyl)-benzyl, e.g., m-(trifluoromethyl)benzyl, methoxybenzyl (e.g., o-, m- or p-methoxybenzyl), chloronitrobenzyl (e.g., 3-nitro-4-chlorobenzyl), chlorofluorobenzyl (e.g., 2-chloro-4-fluorobenzyl), fluorobromobenzyl (e.g., 2-fluoro-4-bromobenzyl), methoxybromobenzyl (e.g., 2-methoxy-5-bromobenzyl), phenylbenzyl (e.g., p-phenylbenzyl), phenylethyl (e.g., 2-phenylethyl) or naphthylmethyl. The cycloalkyl group suitably has 3 to 6 carbon atoms; preferably it is cyclopropyl, cyclopentyl or cyclohexyl. Preferably the haloalkyl group contains 1 to 3 halogen atoms; examples are 2-chloroethyl, trifluoromethyl or trichloromethyl. The halogen can be fluorine, chlorine, bromine or iodine.

A preferred class of compounds of formula (I) are those wherein $R^1$ is benzyl, alpha-methylben-

zyl, alpha-methylchlorobenzyl, alpha-methyldichlorobenzyl, alpha-methylfluorobenzyl, chlorobenzyl, dichlorobenzyl, trichlorobenzyl, tetrachlorobenzyl, pentachlorobenzyl, bromobenzyl, dibromobenzyl, fluorobenzyl, difluorobenzyl, pentafluorobenzyl, mono-, di-, and trimethoxyfluorobenzyl, methylbenzyl, dimethylbenzyl, cyanobenzyl, nitrobenzyl, trifluoromethylbenzyl, methoxybenzyl, chloronitrobenzyl, chlorofluorobenzyl, fluorobromobenzyl, methoxybromobenzyl, phenylbenzyl, phenylethyl or naphthylmethyl, Y is -N-, $R^2$ is propyl or butyl and $R^3$ is hydrogen or methyl. Also preferred are the corresponding compounds wherein Y is -CH-.

Particularly preferred formula (I) compounds are those wherein $R^1$ is allyl, benzyl, alpha-methyl-p-chlorobenzyl, alpha-methyl-2,4-dichlorobenzyl, alpha-methyl-p-fluorobenzyl, o-, m-, or p-chlorobenzyl, 2,4-, 3,4- or 2,6-dichlorobenzyl, 2,4,5- or 2,3,6-trichlorobenzyl, pentachlorobenzyl, m- or p-bromobenzyl, 2,4-dibromobenzyl, o-, m- or p-fluorobenzyl, 2,4-difluorobenzyl, o- or p-methylbenzyl, 2,5-dimethylbenzyl, p-nitrobenzyl, m-(trifluoromethyl)benzyl, o- or p-methoxybenzyl, 3-nitro-4-chlorobenzyl, 2-chloro-4-fluorobenzyl, 2-fluoro-4-bromobenzyl, or 2-methoxy-5-bromobenzyl, Y is -N-, $R^2$ is i-propyl or t-butyl, and $R^3$ is hydrogen or methyl. Also particularly preferred are those compounds wherein $R^1$ is benzyl, o-chlorobenzyl, 2,4-dichlorobenzyl, o- or p-fluorobenzyl, p-bromobenzyl, or 2-chloro-4-fluorobenzyl, Y is -CH-, $R^2$ is t-butyl and $R^3$ is hydrogen or methyl.

Suitable salts of formula (I) are those which have low water solubility (as defined above) and may include inorganic or organic acids, such as hydrochloric, nitric, sulphuric, toluenesulphonic, acetic or oxalic acid. The esters are suitably alkanoates (e.g., acetates) and the ethers are suitably alkyl (e.g., methyl or ethyl), aryl (e.g., phenyl) or aralkyl (e.g., benzyl) ethers. The metal complex is suitably one including copper, zinc, manganese or iron.

Compounds of formula (I) and their use in regulating plant growth are also described in Research Disclosure, p. 44, December 1978 as Disclosure No. 17652.

A particular compound of formula (I) for use in the present invention is the diastereoisomer (enantiomers pair) (2RS,3RS)-1-(4-chlorophenyl-4,4-dimethyl-2-1,2,4-triazol-1-yl)pentan-3-ol of the following formula (II):

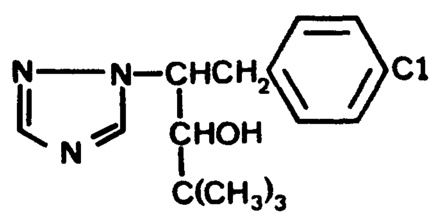

(II)

and the individual enantiomers thereof.

Further, the following compounds may be employed as the PGR within this invention:

A. Compounds of the formula:

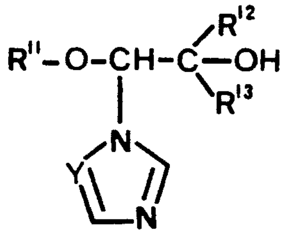

(III)

wherein

$R^{11}$ is a $C_{1-4}$ alkyl;

$R^{12}$ is a $C_{1-6}$ alkyl or unsubstituted or halogen substituted phenyl or biphenyl;

$R^{13}$ is hydrogen, an alkyl, alkenyl or alkynyl of 2 to 6 carbon atoms or an unsubstituted or halogen substituted benzyl (most preferably mono- or di-substituted with fluorine or chlorine);

Y is -CH or -N;

and their acid addition salts and metal complexes.

Especially preferred is the compound wherein

$R^{11}$ is methyl

$R^{12}$ is 2,4-dichlorophenyl

$R^{13}$ is methyl; and

Y is -N.

The compounds of formula (III) are converted to their acid addition salts or metal complexes in a conventional manner.

Acids which can be used for salt formation are, for example, hydrochloric acid, hydrobromic acid, sulfuric acid, nitric acid, phosphoric acid, acetic acid, oxalic acid, and dodecylbenzenesulfonic acid. The effectiveness of the salt depends on the cation, so that any desired anion may be chosen.

Metal complexes are formed by adding the compounds of formula (III) to the cations of metal salts. Particularly suitable salts are copper-II chloride, copper-II sulfate, copper-II nitrate, zinc-II chloride, iron-III chloride, manganese-II chloride and nickel-II bromide.

These compounds are disclosed in U.S. Patent Nos. 4,436,548 and 4,554,285.

B. Compounds of the formula:

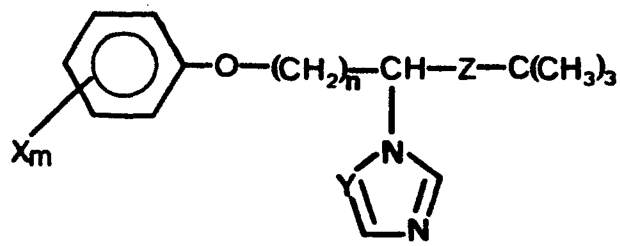

(IV)

wherein

X is hydrogen, halogen, $C_{1-4}$ alkyl, $C_{1-4}$ alkoxy, trifluoromethyl or phenyl;

Y is -N- or -CH-;

Z is CO or $CR^{14}OR^{15}$, where $R^{14}$ is hydrogen or $C_{1-4}$ alkyl and $R^{15}$ is hydrogen, $C_{1-4}$ alkyl, $C_{2-4}$ alkenyl, $C_{2-4}$ alkynyl or $C_{1-4}$ alkanoyl;

m is an integer from 1 to 5 (and where m is greater than 1, the X's may be either identical or different); and

n is an integer from 2 to 5; and their acid addition and metal complex salts.

Examples of possible substituent groups for X include 2-fluoro-, 4-fluoro-, 2-chloro-, 3-chloro-, 4-chloro-, 4-bromo-, 2,4-dichloro-, 2,4,6-trichloro-,

3,5-dichloro-, 2-chloro-4-phenyl-, 2-methyl-4-chloro-, 2-methyl-, 3-methyl-, 4-methyl-, 3-tert-butyl-, 4-tert-butyl-, 2-methoxy-, 3-methoxy-, 4-methoxy-, 3,5-dimethoxy-, 3-n-butoxy-, 4-n-butoxy-, 2-methoxy-4-methyl- and 3-trifluoromethyl-.

Especially preferred is the compound wherein

X is hydrogen;

Y is -N-;

Z is $CR^{14}$ $OR^{15}$, wherein $R^{14}$ and $R^{15}$ are hydrogen;

m is 5; and

n is 2.

The acids employed in the production of the salts of the compounds of formula (III) may also be employed herein to produce the suitable addition salts.

Suitable metal complexes are compounds of the formula

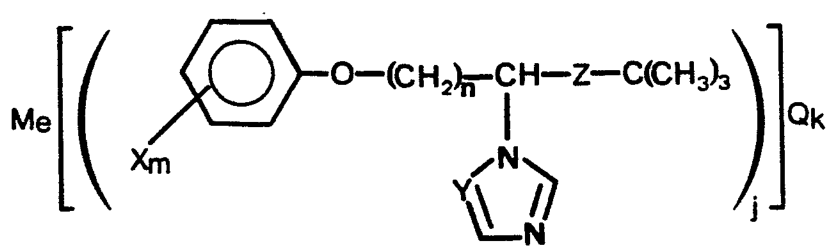

where X, m, n, Y and Z have the above meanings and Me is a metal, for example copper, zinc, tin, manganese, iron, cobalt or nickel, Q is the anion of an inorganic acid, for example hydrochloric acid,

sulfuric acid, phosphoric acid or hydrobromic acid and j and k are 1, 2, 3 or 4.

These compounds are disclosed in U.S. Patent No. 4,380,546.

C. Compounds of the formula (V)

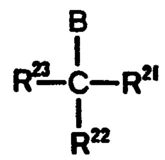

(V)

wherein

$R^{21}$ is trifluoromethoxyphenyl, tetrafluoroethoxyphenyl, pentafluoroethoxyphenyl, 3,4-(difluoromethylenedioxy)phenyl or 2,2,4,4-tetrafluoro-1,3-benzodioxanyl; and

$R^{22}$ is phenyl, pyridyl, $C_1$-$C_{12}$ alkyl or $C_3$-$C_8$ cycloalkyl;

$R^{23}$ is 2-pyrazinyl, 3-pyridyl or 5-pyrimidyl,

B is hydrogen, hydroxy, lower alkoxy, lower alkylthio or lower alkanoyloxy, and

the nonphytotoxic acid addition salts thereof. In particular, the compound of formula (V) wherein $R^{23}$ is 5-pyrimidyl, $R^{22}$ is propyl, $R^{21}$ is trifluoromethoxyphenyl and B is hydroxy, e.g., alpha-isopropyl-alpha-[p-(trifluoromethoxy)phenyl]-5-pyrimidinemethanol, also known as Flurprimidol, may be used in the process of the present invention.

These compounds are disclosed in U.S. Patent Nos. 3,967,949; 4,002,628 and Re. 29,367.

D. Compounds represented by the formula:

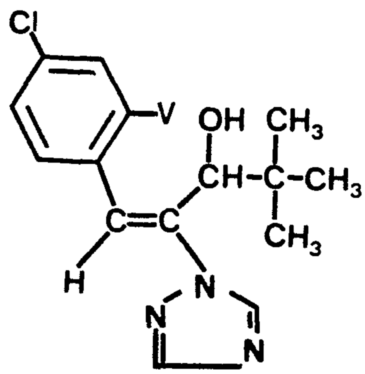

(VI)

wherein V represents a hydrogen or a chlorine atom. The racemic derivatives and geometric and optical isomers of these compounds are disclosed in Japanese Patent Application (Laid-open) No. 124,771/1980 and Japanese Patent Application No. 100,547/1980, Great Britain Patent No. 2,046,260 and U.S. Patent No. 4,435,203, respectively. The compound wherein (VI) is hydrogen is especially preferred.

E. Compounds represented by the formula

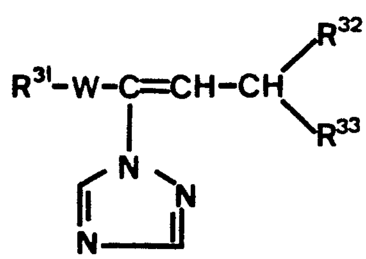

(VII)

wherein

$R^{31}$ is alkyl, substituted alkyl, cycloalkyl, aryl or substituted aryl;

$R^{32}$ is alkyl;

$R^{33}$ is alkyl, cycloalkyl, cycloalkenyl, substituted cycloalkenyl, alkenyl, aryl or substituted aryl; or

$R^{32}$ and $R^{33}$, together with the carbon to which they are bonded, represent cycloalkenyl, substituted cycloalkenyl, cycloalkyl, or substituted cycloalkyl;

W is the group

$$\begin{array}{c} OR^{34} \\ | \\ -C- \\ | \\ R^{35} \end{array}$$

or, alternatively, W may represent a keto group provided that when W is a keto group, $R^{31}$ is alkyl, substituted alkyl, cycloalkyl, or substituted cycloalkyl;

$R^{34}$ is hydrogen, alkyl, aralkyl, substituted aralkyl, acyl, carbamoyl or substituted carbamoyl;

$R^{35}$ is hydrogen, alkyl, aralkyl or substituted aralkyl;

and acid addition salts and metal salt complexes thereof. These compounds are disclosed in DE 2,906,061 and U.S. Patent No. 4,486,218. Of these compounds, 1-cyclohexyl-4,4-dimethyl-2-(1H-1,2,4-triazol-1-yl)pent-1-en-3-ol, having the structural formula:

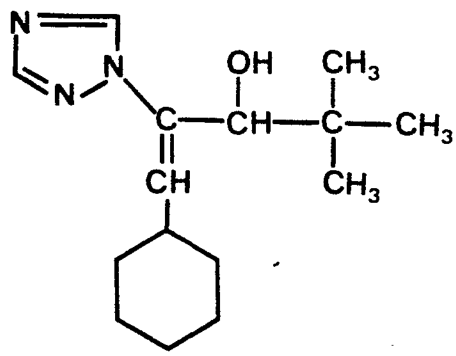

(VIII)

is especially preferred.

F. Triazole and imidazole compounds of the formula

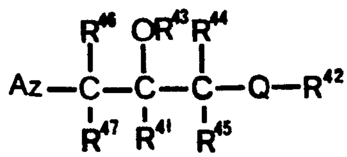

(IX)

wherein $R^{41}$ and $R^{42}$, which may be the same or different, are hydrogen, alkyl, optionally substituted cycloalkyl, cycloalkylmethyl, alkenyl, heterocyclyl, aryl or aralkyl optionally substituted with halogen, nitro, alkyl, haloalkyl, alkoxy, phenyl, phenoxy, benzyl, benzyloxy, halophenyl or haloalkoxy; $R^{43}$ is hydrogen, alkyl, alkenyl, alkynyl, aralkyl or acyl; $R^{44}$ and $R^{45}$, which may be the same or different, are hydrogen, alkyl, alkenyl or optionally substituted aryl; $R^{46}$ and $R^{47}$, which may be the same or different, are hydrogen, alkyl, alkenyl or optionally substituted

aryl; Q is oxygen or sulphur or is SO or $SO_2$ and Az is a 1,2,4- or 1,3,4-triazole or imidazole ring; and isomers, acid addition salts and metal complexes thereof. These compounds are disclosed in European patent publication 61835 herein incorporated by reference. Of particular importance are the compounds wherein $R^{42}$ is 4-halophenyl, such as wherein $R^{41}$ is t-butyl and $R^{42}$ is 4-fluorophenyl, Q is oxygen and $R^{43}$, $R^{44}$, $R^{45}$, $R^{46}$ and $R^{47}$ are hydrogen.

G. Compounds of the formula

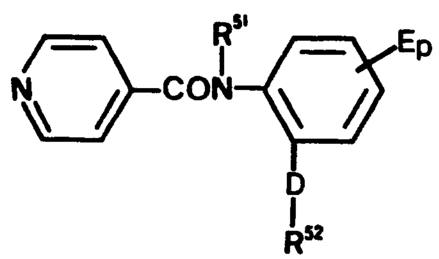

(X)

wherein

$R^{51}$ is a hydrogen atom or a lower alkyl group;

E is a halogen atom or methyl;

p is an integer of from 0 to 2;

$R^{52}$ is phenyl, halo-substituted phenyl or a lower alkyl group; and

D is

OH          O<br>
-CH-, $-CH_2-$ or -C-,

provided that D is

OH<br>
-CH-

or $-CH_2-$ when $R^{52}$ is phenyl or halo-substituted phenyl, and D is

O          OH<br>
-C- or -CH-

when $R^{52}$ is a lower alkyl group. These compounds are disclosed in Great Britain Patent No. 2,047,701 and U.S. Patent No. 4,377,407. Especially preferred is the 4'-chloro-2'-(alphahydroxybenzyl)isonicotinanilide of the structural formula:

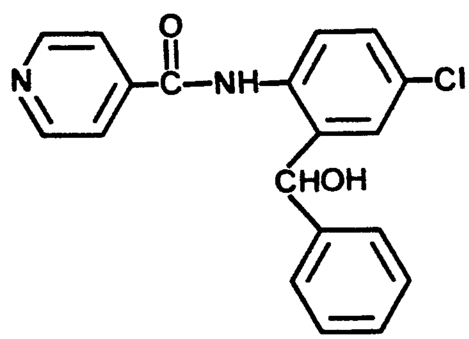

(XI)

H. Compounds of the formulae

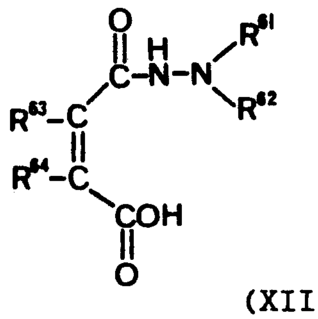

(XII)

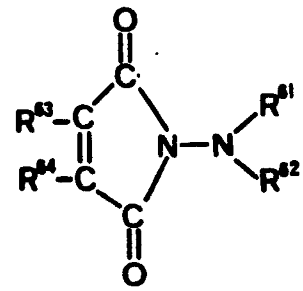

(XIV)

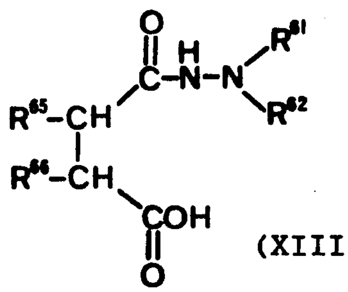

(XIII)

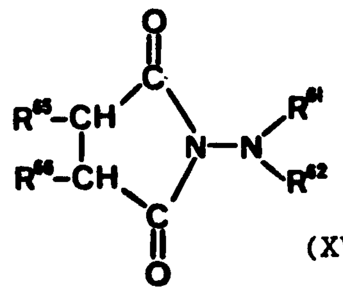

(XV)

wherein $R^{61}$ and $R^{62}$ each stand for an alkyl group having 1 to 12 carbon atoms or $R^{61}$ and $R^{62}$ compositely stand for a $-(CH_2)_4-$, $-(CH_2)_5-$ or $(-CH_2CH_2)_2O$ group; and $R^{63}$ and $R^{64}$ each stand for hydrogen, or one of $R^{62}$ and $R^{64}$ stands for hydrogen and the other stands for a lower alkyl group having 1 to 8 carbon atoms, e.g., methyl, butyl, octyl; and $R^{65}$ and $R^{66}$ each stand for hydrogen, or one of $R^{65}$ and $R^{66}$ stands for hydrogen and the other stands for one of the following: an alkyl group having 1 to 12 carbon atoms, e.g., methyl, octyl, dodecyl; an alkenyl group having 3 to 12 carbon atoms, e.g., propenyl, tetrapropenyl $(C_{13}H_{23}-)$; an aryl group, e.g., phenyl, tolyl, naphthyl; an acyloxy group, e.g., acetoxy; an alkylthio group having 1 to 12 carbon atoms, e.g., methylthio, hexylthio, dodecylthio; an arylthio radical, e.g., phenylthio, tolyl-

thio, naphthylthio. These compounds are disclosed in U.S. Patent Nos. 3,240,799 and 3,334,991. Especially preferred is the compound N-dimethylaminosuccinamic acid.

I. Compounds of the formula

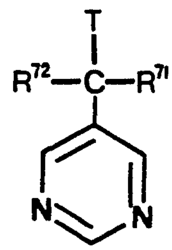

(XVI)

wherein $R^{71}$ is $C_1$-$C_{13}$ alkyl, $C_2$-$C_{11}$ alkenyl, $C_3$-$C_8$ cycloalkyl, or phenyl; $R^{72}$ is benzyl, phenyl, thienyl, or furyl, $C_1$-$C_{13}$ alkyl, or $C_3$-$C_8$ cycloalkyl; T is hydrogen, hydroxyl, $C_1$-$C_4$ acyloxy, halo, amino, cyano, ($C_1$-$C_4$ acyl) amino, $C_1$-$C_3$ alkyl, $C_1$-$C_3$ alkoxy, $C_2$-$C_3$ alkylmercapto, anilino, heterocyclicmercapto, or hydroxylamino; and wherein $R^{71}$, $R^{72}$, T and the pyrimidine ring may be substituted by one or more of the radicals, chloro, bromo, fluoro, iodo, trifluoromethyl, hydroxy, methyl, ethyl, methoxy, methylmercapto, methylsulfonyl, nitro or dialkylamino; the non-phytotoxic acid addition salts formable therewith; excluding 5-isopropylpyrimidine and 5-isoheptylpyrimidine. These compounds are disclosed in Great Britain Patent 1,218,623 and U.S. Patent No. 3,868,244. Especially preferred is alpha-cyclopropyl-alpha-(4-methoxyphenyl)-5-pyrimidinemethanol of the structural formula:

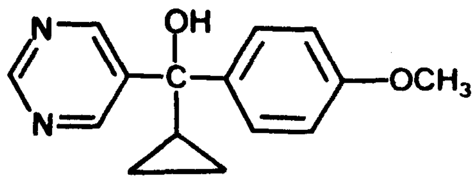

(XVII)

J. Compounds of the formula

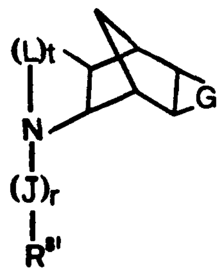

(XVIII)

where L denotes the radical -N=N-, J denotes the radicals $-SO_2-$,

```
 O    S
 ''   ''
-C-, -C-, -S-,
```

G denotes the radicals -N=N- or

```
R82  R83
 '    '
-N  - N-,
```

t denotes one of the integers 0 and 1, r denotes one of the integers 0 and 1, and $R^{81}$ denotes hydrogen, alkyl of 1 to 30 carbon atoms, alkenyl of 1 to 30 carbon atoms, alkynyl of 1 to 30 carbon atoms (preferably alkyl of 1 to 18 carbon atoms) - all of which may

be linear or branched, cyclic or acyclic-, phenyl, naphthyl, or a more highly condensed aromatic radical, a heterocyclic radical with one or more hetero atoms (O, N, S), or aralkyl, it being possible for the aromatic radical to be substituted by a heterocycle, the above-mentioned radicals, apart from hydrogen, being unsubstituted or mono- or polysubstituted by halogen (F, Cl, Br, I) or pseudo-halogen (CN, SCN), -OH, -SH, $-NO_2$, =N-OH, -N-OAlk(Ar), =S, =NH, =NAlk(Ar).

$$=O,\ -\overset{H}{N}-OH,\ -\overset{H}{N}-OAlk(Ar),$$

-COOH or $-SO_3H$ or salts thereof,

$$Alk(Ar)-O-,\ Alk(Ar)-S-,\ Alk(Ar)-\overset{H}{N}-,\ (Alk,Ar)_2N-,$$

$$(Alk)_3\overset{\oplus}{N}-,\ -\overset{\oplus}{S}(Alk)_2,\ Alk(Ar)-\overset{O}{\overset{\|}{C}}-,\ Alk(Ar)-\overset{S}{\overset{\|}{C}}-,$$

$$Alk(Ar)-\overset{O}{\overset{\|}{C}}-O-,\ Alk(Ar)-\overset{S}{\overset{\|}{C}}-O-,\ Alk(Ar)-\overset{O}{\overset{\|}{C}}-S-,$$

$$Alk(Ar)-\overset{O}{\overset{\|}{C}}-N(Alk,Ar)-Alk(Ar)-\overset{S}{\overset{\|}{C}}-S-,\ Alk(Ar)-\overset{O}{\overset{\|}{C}}-\overset{H}{N}-,$$

$$Alk(Ar)-\overset{S}{\overset{\|}{C}}-N(Alk,Ar)-,\ Alk(Ar)-\overset{S}{\overset{\|}{C}}-\overset{H}{N}-,$$

$$Alk(Ar)-SO_2-\overset{H}{N}-,\ Alk(Ar)-SO_2-N(Alk,Ar)-,$$

Alk(Ar)-$SO_2$-, $-\overset{O}{\overset{\|}{C}}-NH_2$, $SO_2-NH_2$, Alk(Ar)O-$\overset{O}{\overset{\|}{C}}$-,

Alk(Ar)O-$\overset{S}{\overset{\|}{C}}$-, Alk(Ar)-S-$\overset{O}{\overset{\|}{C}}$, Alk(Ar)S-$\overset{S}{\overset{\|}{C}}$-, Alk(Ar)$\overset{H}{N}$-$\overset{O}{\overset{\|}{C}}$-,

$(Alk,Ar)_2$N-$\overset{O}{\overset{\|}{C}}$-, Alk(Ar)-$\overset{H}{N}$-$\overset{S}{\overset{\|}{C}}$-, $(Alk,Ar)_2$N-$\overset{S}{\overset{\|}{C}}$-,

Alk(Ar)-$\overset{H}{N}$-$SO_2$-, $(Alk,Ar)_2N-SO_2$-, Alk(Ar)-N=N-,

primary, secondary or tertiary alkyl, haloalkyl, haloalkoxy, haloalkylmercapto, or the radical

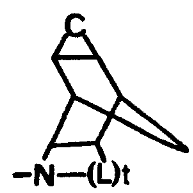

Alk denoting alkyl and Ar denoting an aromatic radical, and $R^{81}$ may additionally denote, when r is 0, $(Alk,Ar)_3Si$-, $(Alk,Ar)_3SN$- and, when r is 1, -OAlk-(Ar), -SAlk(Ar), the radical

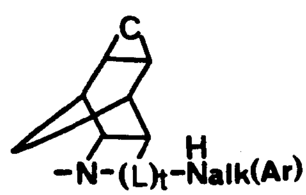

or $-N(Alk,Ar)_2$, and $R^{82}$ and $R^{83}$ are identical or different and each denotes $(J)_r-R^{84}$ $R^{84}$ having the same

meanings as $R^{81}$, and salts of these compounds. These compounds are disclosed in U.S. Patent Nos. 4,189,434; 4,257,941; 4,282,027; 4,268,300; and 4,310,345. Especially preferred is all-cis-5-(4-chlorophenyl)-3,4,5,9,10-pentaatatetracyclo 5,4,1,$0^{2,6}$,$0^{8,11}$ dodeca-3,9-diene of the structural formula

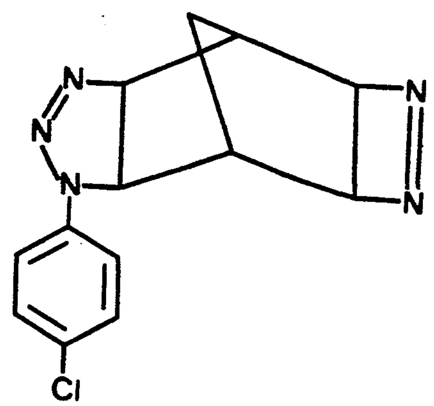

(XIX)

The PGR to be injected into a tree according to the invention is in the form of a mixture, preferably as a solution. The alkanol vehicle of this solution is a lower alkanol of about 1 to 4 carbons, preferably methanol, ethanol, isopropanol, n-propanol and n-butanol or mixtures thereof, and most preferably either methanol or ethanol or mixtures thereof. Such solvents demonstrate no phytotoxic effect on the plant host. In particular, it was discovered that the alkanol carriers have no effect on leaf chlorosis, leaf necrosis, cellular collapse, epinasty or mortality of the host, unlike other organic solvents. Further, such alkanol carriers present no major problems with fluid viscosity or

corrosiveness. The solution may further optionally contain a bactericide.

Injection is carried out as known in the art by cutting or drilling an aperture into the tree trunk at or near ground level, e.g., up to about two feet from ground level. The depth to which the aperture extends generally does not exceed 2.5 inches with normal depths being about 1.75 to 2.5 inches for a tree of a diameter breast height (DBH) of about 8 to 40 inches.

A method of tree injection and apparatus employed herein is discussed in G. K. Brown, "Prototype Equipment for Commercial Pressure - Injection of Aqueous Growth Regulators Into Trees," Journal of Arboriculture, Vol. 4, pp. 7-13, 1978, and in the references noted therein. Under the Brown method the number of injection holes and total injection volume (TIV) of PGR solution is determined by measuring the diameter of the tree at DBH and using the following formulae:

| DBH | # of Injection Holes Required | Total Injection Volume in ml (TIV) | Volume Per Injection Hole |
|---|---|---|---|
| 6"-16" | 3 | $TIV=(DBH)^2 \times 1.59$ | TIV/3 |
| >16" | 6 | $TIV=DBH \times 25.45$ | TIV/6 |

The injection holes are drilled horizontally or tangentially into the trunk (approximately 1 to 2 feet

from the soil line), usually at equal intervals, such that when the PGR is injected into the outer sapwood rapid uptake is facilitated. The injection holes should not penetrate the wood more than 2.5 inches and the drill size should not exceed 7/32 inch. After the aperture is formed, the PGR mixture is injected, such as by a force-fit injector. In the present invention, rapid injection is preferred as devices remaining on the tree for extended periods pose safety/health and vandalism/theft problems.

The Brown technique, however, often does not uniformly retard the growth of the tree. It was found that more uniform results are obtained when a fixed volume-variable injection technique is used. In this process, the subject is injected at equal intervals at approximately 4 to 12 inches, most preferably 4 or 8 inches; the injection volume per hole remaining constant. The injection volume, generally within the TIV of the Brown method within any given DBH, is generally between 20 to 200 ml per injection hole. This procedure generally provides greater distribution of the PGR within the tree.

While any apparatus having the capacity to inject the formulation at pressures in excess of 25 pounds per square inch (psi) may be employed, those wherein the injection pressures are between 100 and 200 psi are preferred since they more readily permit the rapid uptake of the solution in the xylem. Further, apparatus having pressures below this range may unnecessarily extend the treatment period while those above this range may be dislodged or may impart

damage, such as ruptured tissues, bark splitting, etc., to the subject tree.

The PGR injection mixture may be prepared by adding a plant growth regulating effective amount of an active PGR to the alkanol. For rapid injection of an effective dosage of a PGR, the mixture contains about 0.1 to 15%, preferably 0.2 to 10%, by weight of the PGR, based upon the injection of about 10 to 1,000 milliliters of mixture into each tree.

One skilled in the art will readily recognize that the volume of PGR solution injected is dependent upon the tree size, i.e., diameter of the trunk.

Further, one skilled in the art will recognize that the requisite concentration of the PGR in the alcohol formulation will increase when a PGR less active than formula (II) is employed. For example, when a compound of formula (V) is employed as PGR, the concentration of PGR is almost twice that as when (II) is employed as PGR for any given effect. Further, PGR's more active than formula (II), such as those of formula (VI) require a decrease in the formulation concentration. For example when (VI) is used as PGR, the concentration of PGR is approximately half that as when (II) is employed as PGR for any given effect.

The majority of angiosperm tree species grown for ornamental or shade purposes can be injected according to this invention. Representative, though not exhaustive, species are <u>Casuarina equisetifolia</u> (Australian Pine), <u>Ulmus parvifolia</u> (Chinese Elm), <u>Populus deltoides</u> (Eastern Cottonwood), <u>Eucalyptus</u>

species (Eucalyptus Species), Fraxinus pennsylvanica (Green Ash), Quercus laurifolia (Laurel Oak), Quercus virginiana (Live Oak), Acer species (Maple Species), Acer platanoides (Norway Maple), Quercus species (Oak Species), Quercus palustris (Pin Oak), Acer rubrum (Red Maple), Quercus rubra (Red Oak), Ulmus pumila (Siberian Elm), Acer saccharinum (Silver Maple), Acer saccharum (Sugar Maple), Liquidambar styraciflua (Sweetgum), Ulmus species (Elm Species); Platanus occidentalis (Sycamore), Quercus nigra (Water Oak), Quercus alba (White Oak), Quercus phellos (Willow Oak), Ulmus alata (Winged Elm), Enterolobolium cyclocarcum (Ear Tree), Tilia species (Basswood or Limes), Platanus species (Planes or American Sycamore), Pseudoplatanus occidentais (European Sycamore), Fraxinus species (Ash), Salix species (Willow), Populus species (Poplar Species), Alnus species (Alder), Carya species (Hickory), Prunus species (Cherry), and Betula species (Birch). The composition of the invention may be applied also to:

(a) crop plants, including (i) stone fruits, such as Prunus persica (Peach), Prunus armenjara (Apricot), Prunus avium (Cherry), Prunus persica var. nectarina (Nectarine), and Prunus salicina (Plum); (ii) pome fruits, such as Malus communis (Apple) and Pyrus communis (Pear); (iii) citrus, such as Citrus sinensis (Orange), Citrus limon (Lemon) and Citrus aurantisolia (Lime); and (iv) nut, such as Juglans regia (Walnut), Carya illnoensis (Pecan), and Prunus amygdalus (Almond);

(b) species normally grown as shrubs or in hedgerows (provided that the individual species are of a sufficient size to make injection practical), such as Crataegus species (Hawthorn); and

(c) gymnosperm species such as pines; however, some gymnosperms do not respond as well to this treatment as angiosperms.

The examples which follow exemplify the improvements obtained by this invention. However, these examples are not intended to limit the scope of the invention. In Examples 1-41, the subject trees were injected at a distance approximately one foot from the soil line by drilling 7/32 inch diameter holes to a 2 inch depth at a 30-45° angle tangential to the trunk with a pressure injector (150 psi) purchased from the Asplundh Tree Expert Co., Company No. 346-3502. The results are expressed in terms of Retardation and Uniformity Ratings. The Retardation rating scale is as follows:

0 = no retardataion
1 = 1-20% retardation
2 = 21-40% retardation
3 = 41-60% retardation
4 = 61-80% retardation
5 = 81-100% retardation

The Uniformity Rating is a measure of the consistency of response to the treatment between different branches of the tree. The Uniformity scale employed is as follows:

0 = no effect from PGR
1 = poor
2 = fair
3 = acceptable
4 = very good
5 = excellent

Examples 1-6

10 (0.034 moles) grams of (2RS,3RS)-1-(4-chlorophenyl)-4,4-dimethyl-2-1,2,4-triazol-1-yl)pentan-3-ol (II) of the formula

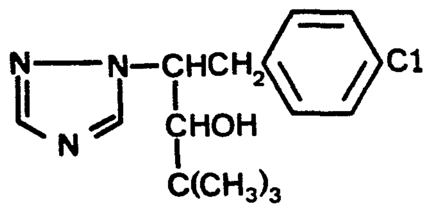

(II)

was dissolved in 1 liter of methanol at room temperature and was stirred until the solution was clear, approximately 20 minutes.

In these examples, the number of injection holes, volume per injection hole and total injection volume in ml was determined from the DBH in accordance with the Brown method. The experimental conditions and results are summarized in Table I.

Table I

| Exs | Species | DBH (in.) | No. Inj. Holes | Inj. Vol./ Hole (ml) | Inj. Vol./ Tree (ml) | Retardation/ Uniformity Ratings at Indicated Week After Treatment | | | |
|---|---|---|---|---|---|---|---|---|---|
| | | | | | | 14 | | 67 | |
| | | | | | | R | U | R | U |
| 1 | Siberian Elm | 12 | 3 | 76 | 229 | 3 | 4 | 5 | 5 |
| 2 | " " | 17 | 6 | 72 | 432 | 3 | 3 | 4 | 3 |
| 3 | " " | 13 | 3 | 89 | 268 | 4 | 4 | 4 | 4 |
| 4 | " " | 11 | 3 | 64 | 192 | 4 | 4 | 5 | 5 |
| 5 | " " | 15 | 3 | 358 | 119 | 3 | 5 | 5 | 5 |
| 6 | " " | 11 | 3 | 64 | 192 | 3 | 4 | 5 | 5 |

Examples 7-17

10 (0.034 moles), 20 (0.068 moles) and 40 grams (0.136 moles) of (2RS, 3RS)-1-(4-chlorophenyl)-4,4-dimethyl-2-1,2,4-triazol-1-yl)pentan-3-ol (PGR) was dissolved in 1,1 and 1 liter, respectively, of methanol at room temperature and was stirred until the solution was clear, approximately 20 to 60 minutes. In these examples, the injection holes were placed at approximate 8 inch intervals. The experimental conditions and results are summarized in Table II.

Table II

| Exs | Species | DBH (in.) | Gms of PGR | No. Inj. Holes | Inj. Vol./ Hole (ml) | Inj. Vol./ Tree (ml) | Retardation/ Uniformity Ratings at Indicated Week After Treatment 24 R | 24 U | 56 R | 56 U |
|---|---|---|---|---|---|---|---|---|---|---|
| 7 | Water Oak | 26 | 10 | 10 | 75 | 750 | 2 | 3 | 3 | 3 |
| 8 | " " | 26 | 10 | 10 | 75 | 750 | 3 | 3 | 3 | 3 |
| 9 | " " | 16 | 10 | 6 | 75 | 450 | 3 | 3 | 5 | 4 |
| 10 | " " | 16 | 10 | 6 | 75 | 450 | 5 | 5 | 5 | 5 |
| 11 | " " | 18 | 20 | 7 | 75 | 525 | 2 | 3 | 4 | 5 |
| 12 | " " | 18 | 20 | 7 | 75 | 525 | 5 | 5 | 5 | 4 |
| 13 | " " | 18 | 20 | 7 | 75 | 525 | 4 | 4 | 4 | 4 |
| 14 | Sycamore | 16 | 20 | 6 | 75 | 450 | 3 | 4 | 4 | 4 |
| 15 | Water Oak | 19 | 40 | 7 | 75 | 525 | 1 | 1 | 4 | 4 |
| 16 | " " | 26 | 40 | 10 | 75 | 750 | 0 | 0 | 3 | 3 |
| 17 | " " | 16 | 40 | 6 | 75 | 450 | 3 | 3 | 3 | 3 |

## Examples 18-20

10 (0.034 moles), 20 (0.068 moles) and 40 grams (0.136 moles) of (2RS, 3RS)-1-(4-chlorophenyl)-4,4-dimethyl-2-1,2,4-triazol-1-yl)pentan-3-ol (PGR) were dissolved in 1,1 and 1 liter, respectively, of methanol at room temperature and was stirred until the solution was clear, approximately 20 to 60 minutes. In these examples, the injection holes were placed at approximate 4 inch intervals. The experimental conditions and results are summarized in Table III.

Table III

| Exs | Species | DBH (in.) | Gms of PGR | No. Inj. Holes | Inj. Vol./ Hole (ml) | Inj. Vol./ Tree (ml) | Retardation/ Uniformity Ratings at Indicated Week After Treatment 24 R | 24 U | 56 R | 56 U |
|---|---|---|---|---|---|---|---|---|---|---|
| 18 | Water Oak | 13 | 10 | 9 | 38 | 342 | 5 | 5 | 5 | 5 |
| 19 | Willow Oak | 14 | 20 | 10 | 38 | 380 | 4 | 3 | 5 | 5 |
| 20 | " " | 17 | 40 | 12 | 38 | 456 | 4 | 4 | 4 | 4 |

Examples 21-24

20 grams of PGR were dissolved in 1 liter of solvent at room temperature and stirred until the solution was clear, approximately 20 minutes. The solution was injected into the trunk of Liquidambar styraciflua (Sweetgum). The conditions and results are summarized in Table IV.

Table IV

| Exs | PGR | Solvent | Trunk Diameter (at point of injection) (in) | No. Inj. Holes | Inj. Vol./ Hole (ml) | Retardation/ Uniformity Ratings at Indicated Week After Treatment | |
|---|---|---|---|---|---|---|---|
| | | | | | | 2 | 6 |
| 21 | PGR-1 | Ethanol | 15 | 6 | 75 | 1 | 3 |
| 22 | PGR-1 | Methanol | 8 | 3 | 50 | 1 | 4 |
| 23 | PGR-2 | Ethanol | 13 | 5 | 75 | 1 | 3 |
| 24 | PGR-2 | Methanol | 9 | 3 | 50 | 1 | 3 |
| Control | -- | -- | 11 | -- | -- | 0 | 0 |

PGR-1:

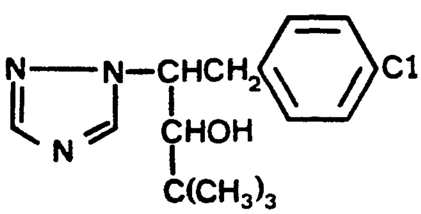

PGR-2:

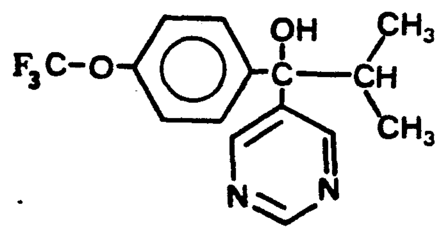

Examples 25-44

(2RS, 3RS)-1-(4-chlorophenyl-4,4-dimethyl-2,-1,2,4-triazol-1-yl)pentan-3-ol (PGR) was dissolved in 1 liter of solvent at room temperature and the resulting solution was stirred until clear, approximately 20 to 30 minutes. Two equal aliquots of the resulting solution were injected into two injection

holes of the trunk of Malus communis (Apple) having a trunk diameter at the point of injection approximately 4 to 5 inches. The injection holes were approximately 12 inches above the soil surface. The percent of growth, based upon a control, was measured 35 days after treatment. The experimental conditions and results are summarized in Table V.

Table V

| Ex. | Amt. PGR Dissolved in 1 liter of Solvent (g) | Solvent | Total Inj. Vol. (ml) | Growth, % of Control |
|---|---|---|---|---|
| 25 | 50 | Ethanol | 10 | 90 |
| 26 | 20 | Ethanol | 25 | 79 |
| 27 | 10 | Ethanol | 50 | 70 |
| 28 | 5 | Ethanol | 100 | 59 |
| 29 | 2.5 | Ethanol | 200 | 58 |
| 30 | 40 | Ethanol | 25 | 77 |
| 31 | 20 | Ethanol | 50 | 82 |
| 32 | 10 | Ethanol | 100 | 76 |
| 33 | 5 | Ethanol | 200 | 58 |
| 34 | 40 | Ethanol | 50 | 72 |
| 35 | 20 | Ethanol | 100 | 60 |
| 36 | 10 | Ethanol | 200 | 56 |
| 37 | 80 | Methanol | 25 | 68 |
| 38 | 40 | Methanol | 50 | 76 |
| 39 | 20 | Methanol | 100 | 60 |
| 40 | 10 | Methanol | 200 | 59 |
| 41 | 40 | Methanol | 100 | 52 |
| 42 | 10 | Water | 50 | 100 |
| 43 | 10 | Water | 100 | 103 |
| 44 | 2 | Water | -- | 84 |
| Control | -- | -- | -- | 100 |

Examples 45-52

10 grams of PGR were dissolved in 1 liter of solvent at room temperature and stirred until the solution was clean, approximately 20 minutes. 0.1 ml of the solution was injected, 203 cm above the soil level, in Vicia faba (Broadbean) with a hypodermic syringe. The conditions and the results (averaged over four replications) are summarized in Table VI.

Table VI

| Exs. | PGR | Solvent | Growth (% Control) At Indicated Days After Treatment 14 | 21 |
|---|---|---|---|---|
| 45 | PGR-1 | Ethanol | 13 | 18 |
| 46 | PGR-1 | Methanol | 12 | 17 |
| 47 | PGR-3 | Ethanol | 23 | 26 |
| 48 | PGR-3 | Methanol | 14 | 27 |
| 49 | PGR-2 | Ethanol | 6 | 7 |
| 50 | PGR-2 | Methanol | 10 | 10 |
| 51 | -- | Ethanol | 101 | 104 |
| 52 | -- | Methanol | 99 | 106 |
| Control | -- | Methanol | 100 | 100 |

PGR-1 and PGR-2: See Examples 21-24

PGR-3:

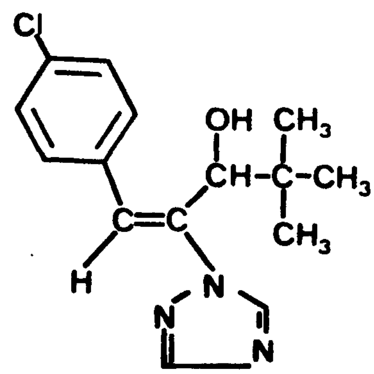

Example 53

This example demonstrates that the compound of formula (II) has high solubility in methanol and that the solubility decreases rapidly upon the addition of water.

An excess of compound of formula (II) was shaken with methanol water mixtures for a minimum of 4

hours. Solvent proportions are shown in Table VII. Samples were passed through a micropore filter to remove undissolved solid, and then centrifuged to remove any emulsified material. The resulting saturated solutions were analyzed by both HPLC and UV absorption against known standard solutions. The results (Table VII), show that the solubility of this compound is high in methanol, but that solubility falls rapidly as the system becomes aqueous. In water alone, solubility is only 35 mg $l^{-1}$ (ppm). Thus, formulations of formula (II) in methanol are low in viscosity when injected, and the PGR will rapidly precipitate within the trunk as the methanol becomes diluted with transpiration water.

Table VII Solubility of Formula (II) in Methanol-water Mixtures

| % Methanol | Solubility (mg $l^{-1}$) |
|---|---|
| 100 | 56,000 |
| 50 | 1,200 |
| 20 | 89 |
| 10 | 53 |
| 0 | 35 |

## Example 54

Example 54, coupled with Example 55, demonstrates the contrasting mobility properties of two dyes, methylene blue and acid fuschin, within the conducting tissue of trees. In particular, the Examples demonstrate that the former dye has very

restricted mobility, whereas acid fuschin is highly mobile.

0.1 g of methylene blue and 0.1 g of acid fuschin were each dissolved in 1 liter of methanol (Me), 50% methanol/water (Me/Wa) and water (Wa). 2 g (fresh weight) of sawdust taken from the active conductive tissues of Birch and Ash were combined with 20 ml of solution. The dye solutions were shaken overnight. The supernatant was decanted and the quantity of dye remaining in solution estimated by spectroscopy. Hence the proportion adsorbed to wood was calculated. The results are graphically demonstrated in Figure 2 and show that:

a) methylene blue binds weakly from methanol and is mobile within the tree only in the methanol solvent; the dye binding almost completely when water is the solvent. The PGRs of this invention thus have similar binding properties to methylene blue; and

b) acid fuschin binds only partially from either solvent and is freely mobile in both water and methanol, thus travelling much further up the tree. Since acid fuschin is much more mobile in the tree, travelling with the transpiration system, it is indicative of the long-range path of the PGRs within the tree.

## Example 55

The movement of methylene blue and acid fuschin was further estimated by injecting whole

trees with a 0.1% solution of the dyes in methanol. A 75ml injection volume was used.

The dye spot area visible in transverse sections at various distances from the injection point was measured. Figure 3 shows the mean results for five birch trees. The movement of methylene blue was largely confined to 0.5 metres above and below the injection point, whereas the largest dye spot area for acid fuschin was at 2 metres from the injection point. (Due to pressure differences between injection fluid and the tree, injected materials initially are forced down the tree, as well as moving upwards). Movement of acid fuschin continued above 2 metres from the injection point (broken lines in Figure 3) however the stain became diluted with distance, and consequently measurement of the area was difficult.

Example 56

This experiment demonstrates that the growth regulators of this invention precipitate upon injection, thereby creating a reservoir in the trunk. In this Example, the movement of methylene blue as a model illustrates the mobility and distribution of the plant regulator compound of formula (II) in the conducting tissue of trees.

Mature trees of Ash (Fraxinus excelsior) and Birch (Betula pendula) were used for this experiment (DBH 6-10 inches, height 30-40 ft). Formula (II) was prepared as a 20 g $l^{-1}$ solution in methanol (low volume) or as a 4 g $l^{-1}$ solution in methanol (high volume) and was injected at volumes of 20 and 100 ml per injection hole, respectively, to give the same total quantity of compound, but different volumes of injected formulation. A pressure injector (80 psi) as described by G. K. Brown was used.

The experiment was carried out in midsummer when the trees were in full leaf. Soil moisture was high, as was evaporative demand. It would be expected that trees would be transpiring rapidly during this time. Ten days after treatment, trees were felled, and log samples taken according to the schedule shown in Figure 1. In the laboratory, each log was sawn transversely in half, using a saw rinsed in methanol to prevent contamination from one sample to the next. The sawdust from each cut was collected and thoroughly mixed. A 2 g subsample was extracted in 20 ml methanol by means of a rotating arm shaken for a minimum of 4 hours. The sample was then centrifuged and the supernatant decanted and collected. Extraction was then repeated and the supernatant combined with that from the first extraction. The supernatant was evaporated to dryness and the residue redissolved in 5 ml acetone. Quantities of the compound of formula (II) were then estimated by gas-liquid chromatography against standard solutions in acetone and against extracts from untreated wood. Finally, untreated sawdust was "spiked" with known amounts of the compound of formula (II) and then extracted according to the above procedure to check that recovery was complete. The trees were also injected with similar

volumes of methylene blue (formulated as 10g $1^{-1}$ solution in methanol). Formula (II) and methylene blue were extracted from the sawdust according to the methods described above. The similar distribution of the two compounds within the tree is shown diagrammatically in Figure 4. After felling, the dye traces were examined. It was found that most of the compound of formula (II) remained close to the point of injection and had not moved substantially to the crowns of the trees; that the distribution of (II) was similar to that of methylene blue which, for reasons of absorption (Figure 2), is not as mobile as acid fuschin within the xylem of the trees.

Example 57

This example illustrates the binding (absorption) properties of the PGR of this invention to wood of the conducting tissue of Betula pendula-Roth (Birch). The compounds of this invention preferably show partial and reversible binding which enhances the slow release effect by initial precipitation in the trunk. Sawdust samples were obtained from the outer wood of freshly cut, debarked logs. 2 gm samples of sawdust were shaken with 20 ml water containing $^{14}C$ triazole-labelled (II) at a concentration of 10 mg $1^{-1}$. At intervals, the aqueous phase was subsampled, and the concentration of (II) determined by scintillation counting. A decrease in concentration reflects binding to the wood, expressed as kd (ratio of chemical bound to wood:chemical in solution). The results are shown in Table VIII.

Table VIII Absorption Kinetics for compound (II)

| Time (hours) | μg in solution | kd |
|---|---|---|
| 0 | 200 | - |
| 0.5 | 116 | 0.7 |
| 1 | 84 | 1.4 |
| 2 | 81 | 1.5 |
| 4 | 75 | 1.7 |
| 8 | 72 | 1.8 |
| 24 | 74 | 1.7 |
| 48 | 76 | 1.8 |

The results indicate rapid establishment of an absorption equilibrium such that about 1½ times as much chemical was bound to wood as was free in solution. Similar results were obtained for other species of trees as tabulated in Table IX.

Table IX Absorption Coefficient (at equilibrium) for (II)

| Species | Kd |
|---|---|
| Pinus sylvestris L. (Pine) | 2.3 |
| CV Bramley (Apple) | 3.9 |
| Cupressus leylandii (Cypress) | 4.6 |

## Example 58

This example illustrates the desorption properties of the PGR of this invention. By the

addition of fresh water (i.e., in vivo, the continued transpiration in the tree) a proportion of the compound is released. This example, coupled with Example XXIV, demonstrates that binding is reversible, such absorption-desorption properties contributing to the requisite slow-release effect of this invention. Sawdust was shaken with aqueous solutions of $^{14}C$ labelled compound as before to establish the absorption equilibrium. Material was centrifuged and replaced in fresh water. This solution was subsampled at intervals to monitor release of compound into solution. The results for birch are shown in Table X.

Table X Desorption From Birch Sawdust

| Time (hours) | Kd |
|---|---|
| 0.1 | 3.0 |
| 24 | 2.8 |
| 48 | 2.8 |
| 72 | 3.0 |
| 96 | 3.1 |

In summary, therefor, Examples 54 and 55 demonstrate the two dyes, methylene blue and acid fuschin, bind differently to the conducting tissue of sawdust and have different mobilities in whole trees. Methylene blue binds strongly to conducting tissue in water and weakly in methanol and thus is relatively immobile in trees, whereas acid fuschin binds weakly to conducting tissue in both water and methanol and is highly mobile in trees. A compound to be used in the present invention would be expected

to behave in a similar fashion in trees as methylene blue. The mobility of the compound of formula II was compared to methylene blue in Example 56. After a period both the compound of formula II and the dye were found to be similarily distributed close to the injection point. Examples 56 and 57 confirm these conclusions using radio labelled compound of formula (II). The solubility of the compound of formula (II) in methanol and water (Example 53) is such that as methanol becomes diluted with water the compound precipitates out of solution. This would naturally happen in the trunk of the tree as the injection fluid mixes with the transpiration water.

Collectively these examples confirm that the methods of this invention do create a reservoir of growth regulator by precipitation in the trunk of the tree. The reservoir is located in vessels which can transport material towards the crown of the tree as shown by the movement of the mobile dye, acid fuschin (Example 55) and thus movement of the plant growth regulator is gradual and growth retardation can be sustained for a worthwhile period of time.

1. A composition comprising a plant growth regulator and a lower alkanol.

2. A composition according to claim 1 wherein the plant growth regulator is an inhibitor of gibberellin biosynthesis.

3. A composition according to claim 1 or 2 wherein the plant growth regulator has a solubility in water of less than 1,000 ppm by weight.

4. A composition comprising :

(I) a plant growth regulating effective amount of at least one compound selected from the group consisting of

A.

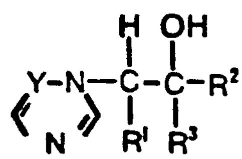

(I)

wherein

Y is -N- or CH-;

$R^1$ is alkenyl, alkynyl or optionally substituted aralkyl;

$R^2$ is cycloalkyl, alkyl or haloalkyl; and

$R^3$ is hydrogen, methyl or alkenyl,

or a lower water soluble ester, ether, acid addition salt or a metal complex thereof;

B.

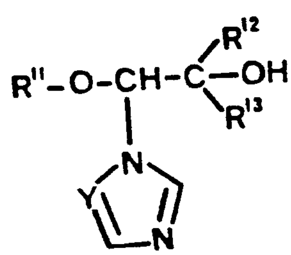

(II)

wherein

$R^{11}$ is a $C_{1-4}$ alkyl;

$R^{12}$ is a $C_{1-6}$ alkyl or unsubstituted or halogen substituted phenyl or biphenyl;

$R^{13}$ is hydrogen, an alkyl, alkenyl or alkynyl of 2 to 6 carbon atoms or an unsubstituted or halogen substituted benzyl; and

Y is -CH or -N

and their acid addition salts and metal complexes;

C.

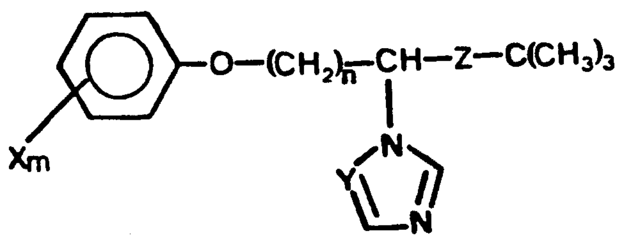

(III)

wherein

X is hydrogen, halogen, $C_{1-4}$ alkyl, $C_{1-4}$ alkoxy, trifluoromethyl or phenyl;

Y is -N- or -CH-;

Z is CO or $CR^{14}OR^{15}$, where $R^{14}$ is hydrogen or $C_{1-4}$ alkyl and $R^{15}$ is hydrogen, $C_{1-4}$ alkyl, $C_{2-4}$ alkenyl, $C_{2-4}$ alkynyl or $C_{1-4}$ alkanoyl;

m is an integer from 1 to 5; and

n is an integer from 2 to 5;

D.

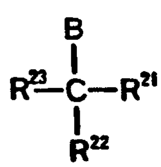

(IV)

wherein

$R^{21}$ is trifluoromethoxyphenyl, tetrafluoroethoxyphenyl, pentafluoroethoxyphenyl, 3,4-(difluoromethylene-dioxy)-phenyl or 2,2,4,4-tetrafluoro-1,3-benzodioxanyl;

$R^{22}$ is phenyl, pyridyl, $C_1$-$C_{12}$ alkyl or $C_3$-$C_8$ cycloalkyl;

$R^{23}$ is 2-pyrazinyl, 3-pyridyl or 5-pyrimidyl;

B is hydrogen, hydroxy, lower alkoxy, lower alkylthio or lower alkanoyloxy; and

the nonphytotoxic acid addition salts thereof;

E.

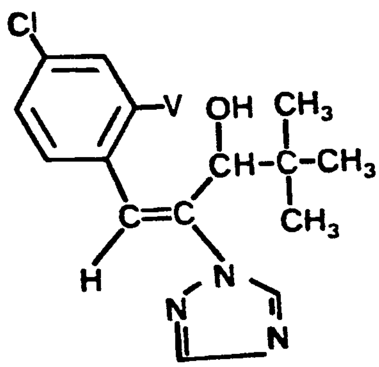

(V)

wherein V is -H or -Cl;

F.

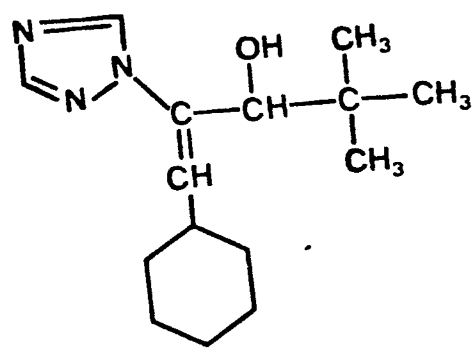

(VI)

G.

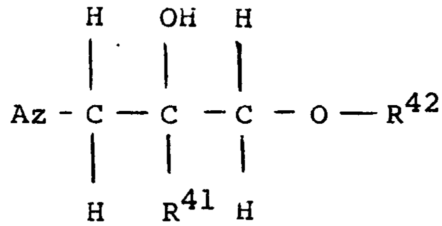

(VII)

wherein $R^{41}$ is t-butyl;

$R^{42}$ is 4-halophenyl and

Az is a 1,2,4- or 1,3,4- triazole or imidazole ring;

H.

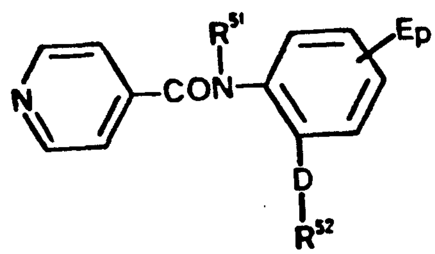

(VIII)

wherein $R^{51}$ is a hydrogen atom or a lower alkyl group;

E is a halogen atom or methyl;

P is 0, or 2;

$R^{52}$ is phenyl, halo-substituted phenyl or a lower alkyl group; and

D is

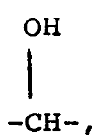, 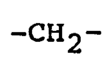 or 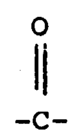,

provided that D is

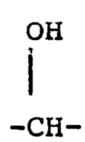

or $-CH_2-$ when $R^{52}$ is phenyl or halo-substituted phenyl, and D is

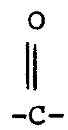 or 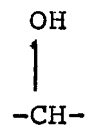

when $R^{52}$ is a lower alkyl group; and

I.

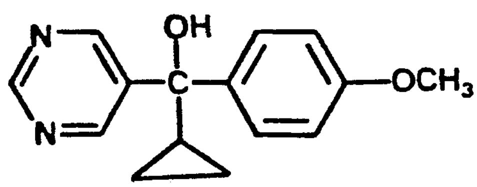

(IX)

and

(II) and at least one alkanol containing one to four carbon atoms.

5. A composition according to claim 4 wherein said compound is of the formula :

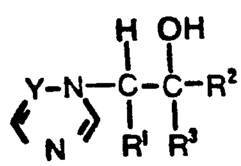

wherein

Y is nitrogen;

$R^1$ is allyl or benzyl optionally ring substituted with one or two substituents selected from the group consisting of halo-

gen, $C_{1-4}$ alkyl, halo($C_{1-4}$ alkyl), $C_{3-6}$ cycloalkyl, nitro, cyano, $C_{1-4}$ alkoxy and ($C_{1-4}$ alkylene)dioxy, and/or optionally substituted on the alpha-carbon atom with one $C_{1-4}$ alkyl;

$R^2$ is propyl or butyl;

$R^3$ is hydrogen or methyl;

or a low water soluble alkanoate ester, acid addition salt or a copper, zinc, manganese or iron complex thereof.

6. A composition according to claim 5, wherein said compound is of the formula :

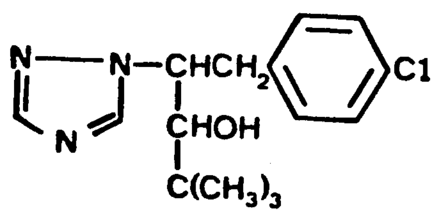

7. A composition according to claim 4 wherein said compound is of the formula :

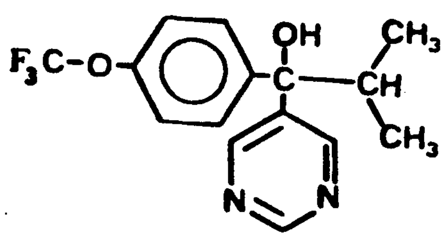

8. A composition according to any of the preceding claims wherein the alkanol is methanol or ethanol.

9. A composition according to any of the preceding claims containing between 0.1 and 15% by weight of said compound.

10. A composition according to claim 6 containing between 0.2 and 10% by weight of said compound.

11. A method of retarding the growth of a tree which comprises injecting into the trunk of the tree a composition according to any of claims 1 to 10.

12. A method according to claim 11, wherein said injecting is at a pressure of about 100 to 200 pounds per square inch.

13. A method accordig to claim 11 or 12 wherein said injecting is at a depth of about 1.75 to 2.5 inches for a tree of a diameter breast height of about 8 to 40 inches.

14. A method according to any of claims 11 to 13 wherein the trunk of the tree is injected with said composition at approximately equal intervals between four to twelve inches.

15. A method according to any of claims 11 to 14 wherein the volume of said composition injected at each interval is constant.

16. A method according to any of claims 11 to 15 wherein the injection volume is from 10 to 1000 millilitres per tree.

FIG.1

SAMPLING OF LOGS FROM ASH AND BIRCH

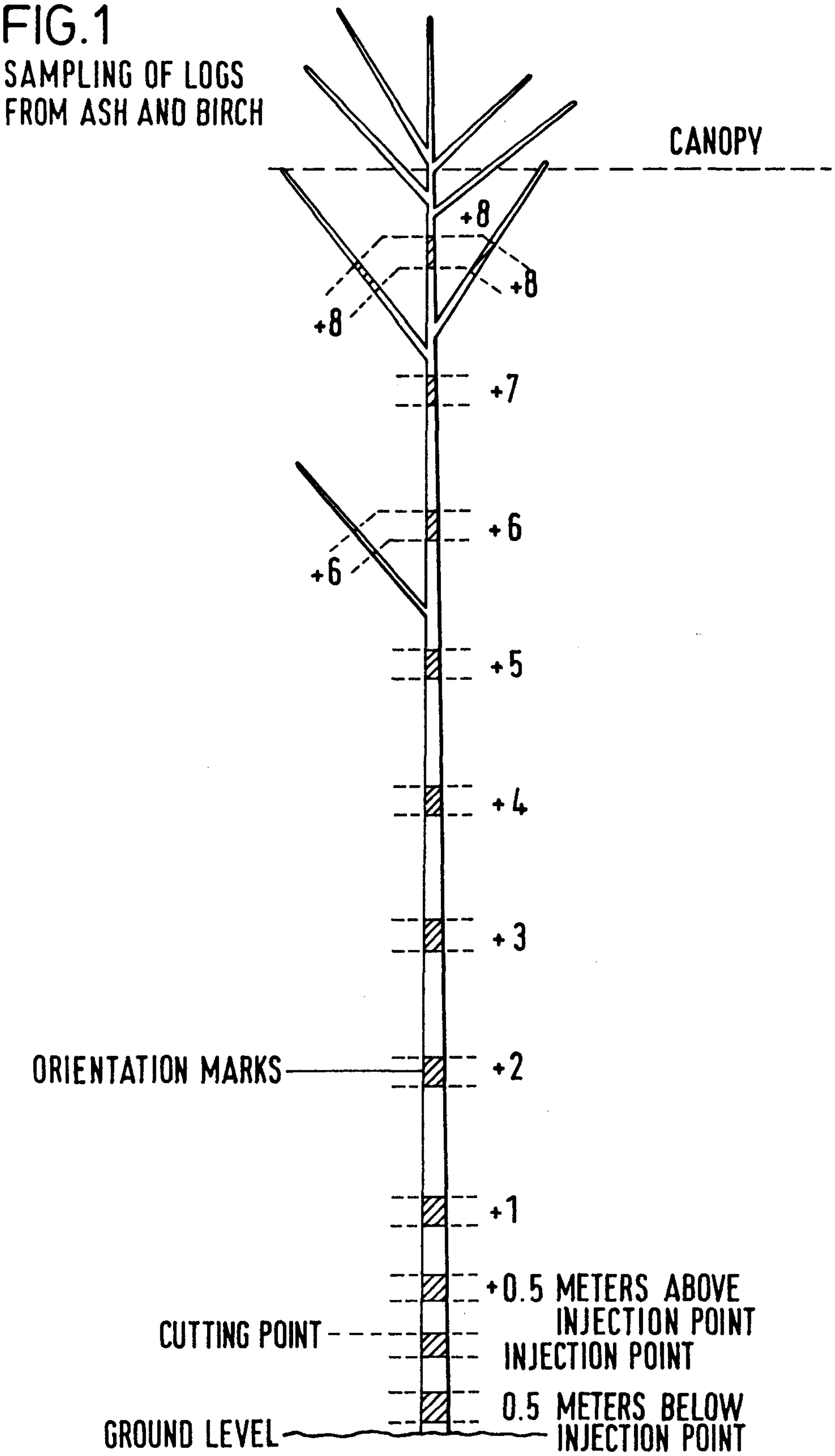

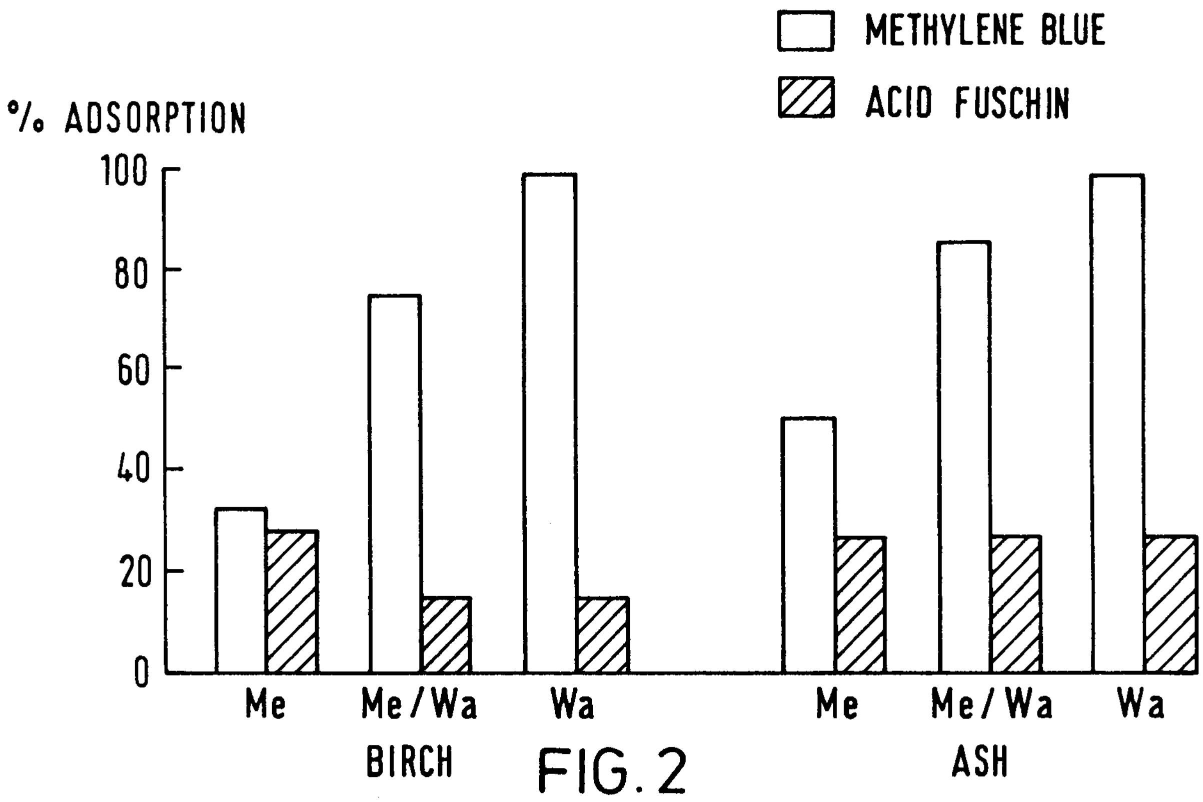
METHYLENE BLUE
ACID FUSCHIN
% ADSORPTION
100
80
60
40
20
0
Me
Me / Wa
Wa
Me
Me / Wa
Wa
BIRCH
ASH

FIG. 2

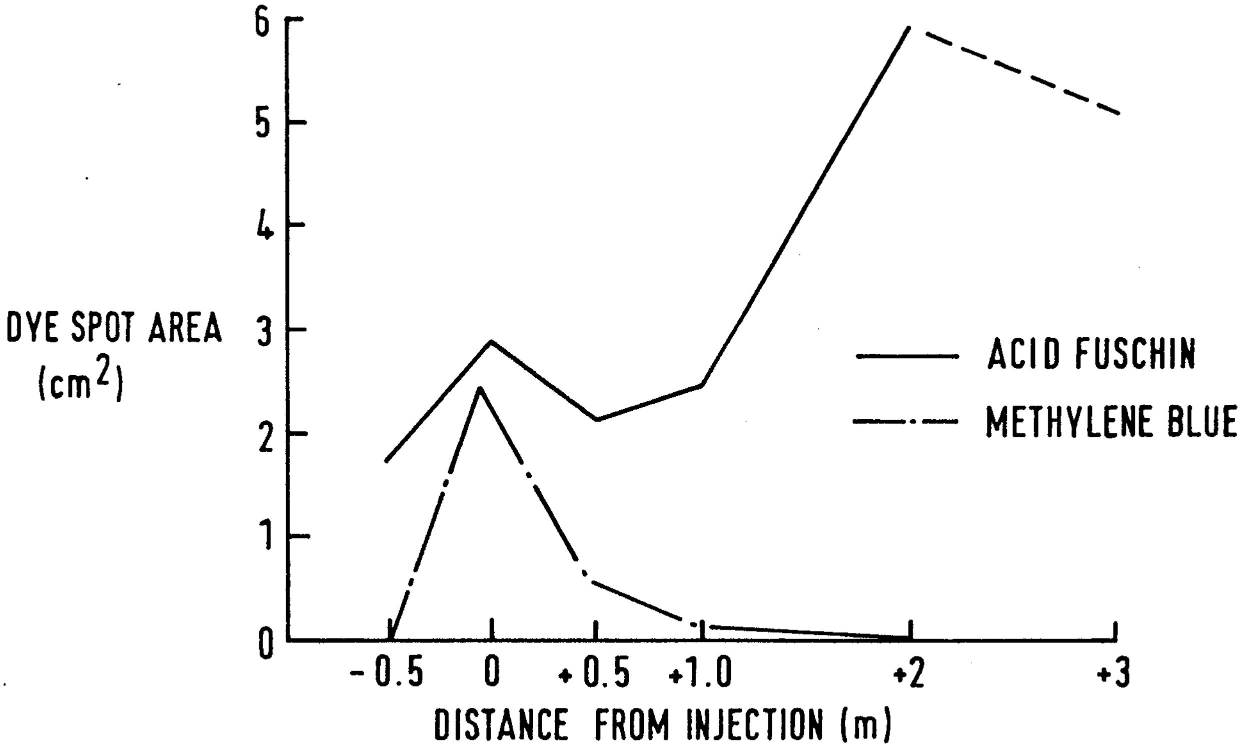
6
5
4
3
2
1
0
DYE SPOT AREA
(cm2)
ACID FUSCHIN
METHYLENE BLUE
-0.5
0
+0.5
+1.0
+2
+3
DISTANCE FROM INJECTION (m)

FIG. 3

FIG. 4

DISTRIBUTION OF (II) (●—●) AND METHYLENE BLUE (○- -○) THROUGH BIRCH AND ASH TREES

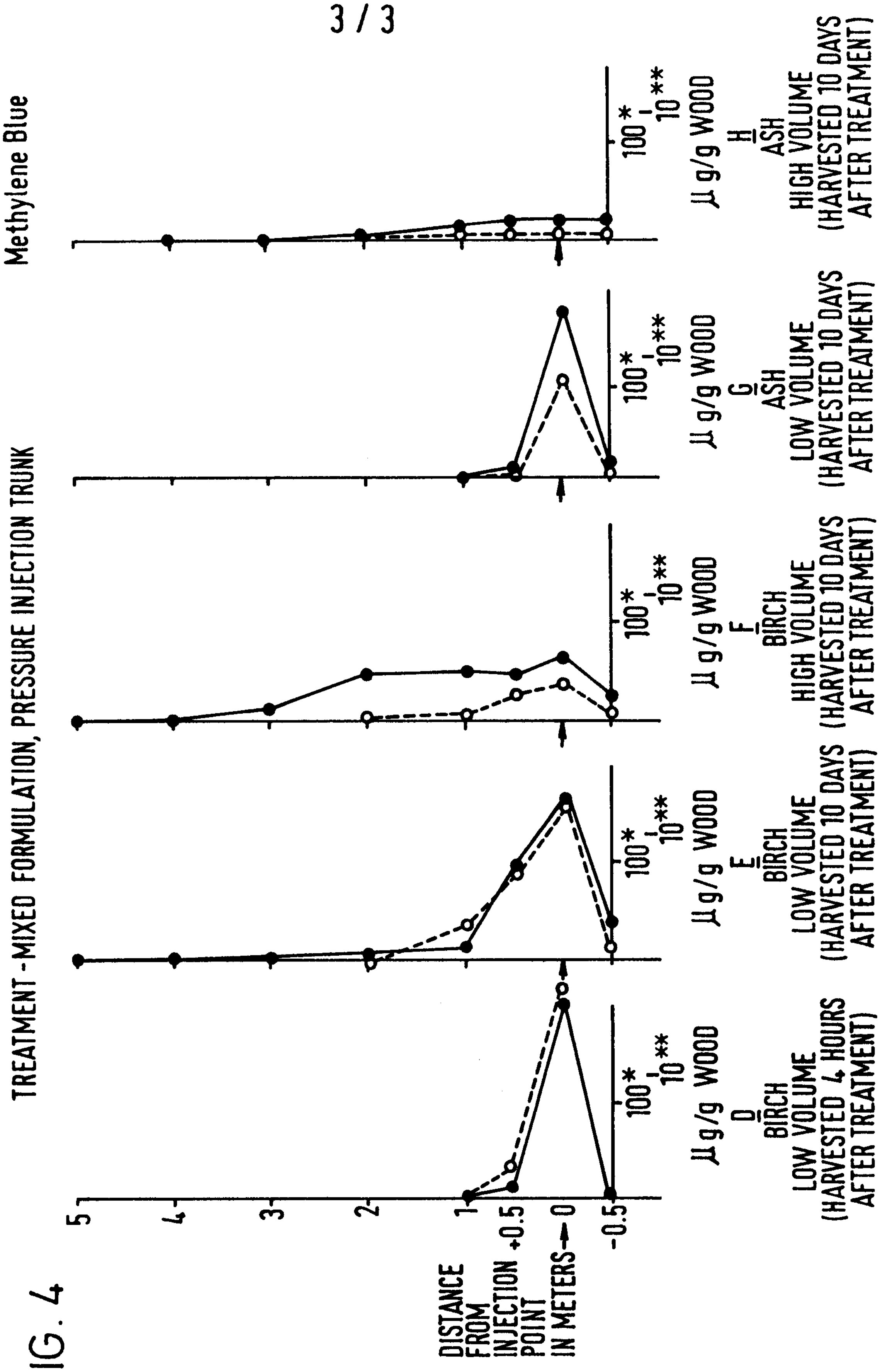

European Patent Office

# EUROPEAN SEARCH REPORT

0212822
Application number

EP 86 30 5230

**DOCUMENTS CONSIDERED TO BE RELEVANT**

| Category | Citation of document with indication, where appropriate, of relevant passages | Relevant to claim | CLASSIFICATION OF THE APPLICATION (Int. Cl.4) |
|---|---|---|---|
| X | COMMONWEALTH AGRICULTURAL BUREAUX, 1980, no. 81008838 CAB, Hough, GB; A. DUNBERG: "Stimulation of flowering in Picea abies by gibberellins", & SILVAE GENETICA, vol. 29, no. 2, 1980, p. 51-53, 6 ref. * Abstract, line 2 * --- | 1,8 | A 01 N 25/02<br>A 01 N 43/653<br>A 01 N 43/54<br>A 01 G 7/06 |
| Y | CHEMICAL ABSTRACTS, vol. 95, no. 23, 7th December 1981, page 225, abstract no. 199058q, Columbus, Ohio, US; & JP-A-81 113 701 (NIHON NOHYAKU CO. LTD.) 07-09-1981 * Abstract * --- | 1,11 | |
| Y | CHEMICAL ABSTRACTS, vol. 102, no. 13, 1st April 1985, page 251, abstract no. 108133j, Columbus, Ohio, US; J.P. STERRETT: "Paclobutrazol: a promising growth inhibitor for injection into woody plants", & J. AM. SOC. HORTIC. SCI. 1985, 110(1), 4-8 --- -/- | 1-6 | **TECHNICAL FIELDS SEARCHED (Int. Cl.4)**<br>A 01 N<br>A 01 G |

The present search report has been drawn up for all claims

| Place of search | Date of completion of the search | Examiner |
|---|---|---|
| THE HAGUE | 18-11-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

European Patent Office

0212822

Application number

## EUROPEAN SEARCH REPORT

EP 86 30 5230

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| Y | CHEMICAL ABSTRACTS, vol. 101, no. 15, 8th October 1984, page 225, abstract no. 124736t, Columbus, Ohio, US; H. HIELD: "Early responses to EL500 and paclobutrazol trunk banding of ornamental trees", & PROC. PLANT GROWTH REGUL. SOC. AM. 1983, 10th, 182-90<br>--- | 1-7 | |
| A | BIOLOGICAL ABSTRACTS, vol. 64, no. 8, 1977, page 4418, abstract no. 45046, Biosciences Information Serivice, Philadelphia, US; R.M. SACHS et al.: "Pressurized injection of aqueous solutions into tree trunks", & SCI. HORTIC. 6(4): 287-310, 1977<br>----- | 11-16 | TECHNICAL FIELDS SEARCHED (Int. Cl.4) |

The present search report has been drawn up for all claims

| Place of search | Date of completion of the search | Examiner |
|---|---|---|
| THE HAGUE | 18-11-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document